# EUROPÄISCHE PATENTANMELDUNG

(11) **EP 0 744 423 A1**
(43) Veröffentlichungstag der Anmeldung: **27.11.1996**
(21) Anmeldenummer: 96104568.9
(22) Anmeldetag: 22.03.1996
(51) Int. Cl.: C08G 18/80

(54) **Neue blockierte Polyisocyanate sowie ein Verfahren zu ihrer Herstellung**

(30) Priorität: 26.05.1995 DE 19519396
(71) Anmelder: HÜLS AKTIENGESELLSCHAFT, 45764 Marl (DE)
(72) Erfinder: Wolf, Elmar, Dr., 45661 Recklinghausen (DE); Theis, Christoph, Dr., 53859 Niederkassel (DE)

(57) **Zusammenfassung**

Gegenstand der vorliegenden Erfindung sind ganz oder teilweise mit Malonsäureestern blockierte (cyclo)-aliphatische Polyisocyanate, wobei der Malonsäureester mindestens eine tert.-Butylgruppe enthält.

## Beschreibung

Gegenstand der vorliegenden Erfindung sind ganz oder teilweise mit speziellen Malonsäureestern blockierte (cyclo)-aliphatische Polyisocyanate sowie ein Verfahren zu ihrer Herstellung.

Die Blockierung von aliphatischen Diisocyanaten mit Malonsäureestern ist eine seit langem bekannte Reaktion. Sie wurde erstmals im D.R.P. 756 058 (1942) beschrieben. Die Blockierung von Isophorondiisocyanat (IPDI) mit Malonsäureestern wird in der DE-OS 24 36 872 offenbart, die entsprechende Blockierung des trimeren IPDI in der DE-OS 30 01 060.

In der DE-OS 24 56 469 wird ein Verfahren zur Herstellung von in Wasser löslichen bzw. dispergierbaren Polyisocyanaten und ihre Verwendung als Beschichtungsmittel beschrieben, wobei die blockierten Isocyanate malonsäureesterblockiertes Biuret des Hexamethylendiisocyanates sind.

In der DE-OS 25 50 156 werden verkappte, in Lacklösungsmitteln leicht lösliche Polyisocyanatgemische beansprucht, die in Kombination mit Polyesterpolyolen zu 1K-PUR-Einbrennlacken formuliert werden können. Bei diesen blockierten Polyisocyanaten handelt es sich um Reaktionsprodukte des Trimethylolpropans (1 OH-Äquiv.) und IPDI (2 - 12 NCO-Äquiv.), deren freie NCO-Gruppen mit Malonsäureestern, spez. Malonsäurediethylester, blockiert sind.

Der wesentliche Nachteil der bekannten mit Malonestern blockierten Polyisocyanate ist die relativ hohe Deblockierungstemperatur.

Es wurde nun überraschenderweise gefunden, daß die Deblockierungstemperatur der in den aufgeführten Patentschriften mit Malonsäureestern blockierten Polyisocyanaten um 10 - 20 °C gesenkt werden kann, wenn der zur Blockierung eingesetzte Malonsäureester mindestens eine tert.-Butylgruppe enthält.

Gegenstand der vorliegenden Erfindung sind vollständig oder teilweise mit Malonsäureestern blockierte (cyclo)-aliphatische Polyisocyanate, wobei als Polyisocyanate
A) Diisocyanate der allgemeinen Formel

   OCN-R-NCO,

   wobei R ein (cyclo)-aliphatischer Kohlenwasserstoffrest mit 6 - 14 C-Atomen bedeutet und/oder
B) Polyisocyanatoisocyanurate der allgemeinen Formel 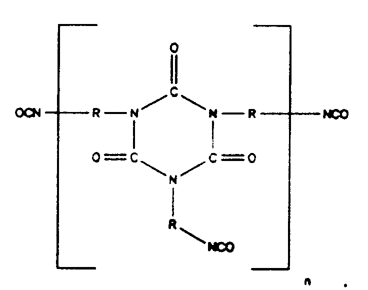 wobei n = 1 - 3 sein kann, R die Bedeutung wie unter A angegeben hat und A:B in einem Gewichtsverhältnis von (100-0):(0-100) zueinander stehen,
C) und als Blockierungsmittel Malonsäureester der allgemeinen Formel 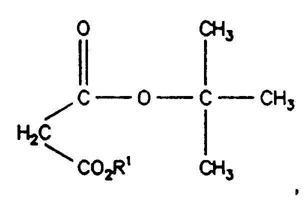 wobei R¹ ein Alkylrest mit 1 - 10 C-Atomen oder 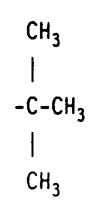 bedeutet,
   eingesetzt werden und der Anteil an freien NCO-Gruppen im Reaktionsprodukt höchstens 4 % beträgt.

Die erfindungsgemäßen Verbindungen zeichnen sich durch einen blockierten NCO-Gehalt von 9 - 16 %, einen Gehalt an Isocyanuratgruppen von 0 - 7 mmol/g und einen freien NCO-Gehalt von 0 - 4 Gew.-% aus. Sie sind reaktiver, d. h. sie härten (im Gemisch mit der Polyolkomponente) bei um ca. 10 - 20 °C tieferen Temperaturen als dies mit den entsprechenden Malonsäurediethylester blockierten Polyisocyanaten möglich ist.

Als Diisocyanatkomponente A sind die folgenden prinzipiell einsetzbar: Hexamethylendiisocyanat, 2-Methyl-pentamethylendiisocyanat, 2.2.4(2.4.4)-Trimethylhexamethylendiisocyanat, Cyclohexan-1.3 und 1.4-diisocyanat, Isophorondiisocyanat (IPDI), Hexahydroduroldiisocyanat, 4.4'-Diisocyanatdicyclohexylmethan und Hexahydroxylylendiisocyanat-1.4 und 1.3.

Besonders bevorzugt wird jedoch Isophorondiisocyanat, Hexamethylendiisocyanat und 2.2.4(2.4.4)-Trimethylhexamethylendiisocyanat, verwendet.

Die Komponente B ist auswählbar aus den Isocyanaten der unter A aufgeführten Diisocyanate, bevorzugt werden jedoch die technisch verfügbaren Isocyanate des IPDI oder Hexamethylendiisocyanats.

Das Verhältnis A:B kann sehr weit variieren und liegt im Bereich von (100-0):(0-100). Es werden bevorzugt die reinen Komponenten eingesetzt: entweder nur A oder nur B.

Als Blockierungsmittel geeignete Malonester sind Malonsäuremethyl-, Malonsäureethyl-, Malonsäurepropyl-, Malonsäure-isopropyl-, Malonsäurebutyl-, Malonsäure-2-Ethylhexyl-tert.-butylester sowie Malonsäure-di-tert.-butylester.

Ein weiterer Gegenstand der vorliegenden Erfindung ist ein Verfahren zur Herstellung der erfindungsgemäßen Verbindungen. Hierbei wird das Polyisocyanat - das Diisocyanat (Komponente A) und/oder das daraus hergestellte Isocyanuratgruppen enthaltende Polyisocyanat (Komponente B) - mit dem mindestens eine tert.-Butylestergruppe enthaltenden Malonsäureester und einem Katalysator in dem gewünschten NCO:H₂C (aktive Methylengruppe des Malonsäureesters)-Verhältnis umgesetzt. Wird zur Blockierung ein Isocyanuratgruppen enthaltendes Diisocyanat-Gemisch eingesetzt (Komponente A und B), so erfolgt in der Regel die Herstellung dieses Gemisches durch katalytische Trimerisierung des Diisocyanates (Komponente A) in situ, d. h. das Diisocyanat (Komponente A) wird mit einem Trimerisierungskatalysator, der nicht Gegenstand der vorliegenden Erfindung ist, bis zu dem gewünschten Gehalt an Polyisocyanurat (Komponente B) teilweise trimerisiert.

Als besonders vorteilhaft hat es sich erwiesen, zur Blockierung ein praktisch diisocyanatfreies trimeres Diisocyanat (Isocyanatoisocyanurat) (Komponente B) einzusetzen. Die Herstellung des Isocyanatoisocyanurates erfolgt in zwei Stufen, wobei in der 1. Stufe das Diisocyanat mit einem Katalysator - in der Regel einem quaternären Ammoniumsalz - zu ca. 40 % umgesetzt wird. In der 2. Stufe erfolgt dann die Abtrennung des nicht umgesetzten Diisocyanates durch eine Dünnschichtdestillation. Als Trimerisierungskatalysatoren kommen solche, wie sie z. B. in der GB-PS 13 91 066, DE-PS 23 25 826 oder DE-PS 26 44 684 beschrieben sind, in Frage. Als besonders vorteilhaft hat sich die Trimerisierung von Diisocyanaten mit den in der DE-PS 29 16 201 ( 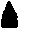 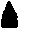 EP 0 017 998) beschriebenen Katalysatoren erwiesen. Bei dem erfindungsgemäßen Verfahren können die so zugänglichen monomerfreien Polyisocyanatoisocyanurate entweder direkt oder aber im Gemisch mit isocyanuratfreiem Diisocyanat eingesetzt werden. Der Zusatz von isocyanuratgruppenfreiem Diisocyanat gestattet auf einfache Weise die Eigenschaften der Verfahrensprodukte, insbesondere ihre Viskosität oder ihren Schmelzpunkt, in gewünschter Weise zu variieren. Die Blockierung der NCO-Komponente erfolgt durch Umsetzung von 1 - 1,3 NCO-Äquivalenten des Diisocyanates bzw. Polyisocyanatoisocyanurates mit 1 mol Malonsäureester C) in Gegenwart von 0,01 - 1 Gew.-%, vorzugsweise 0,05 - 0,2 Gew.-%, eines Katalysators. Als Katalysatoren werden Alkalialkoholate, insbesondere Na-methylat, das gewöhnlich als etwa 30%ige methanolische Lösung verwendet wird, wie auch Zinkacetylacetonat und Zinkoctoat eingesetzt. Die Umsetzung kann bei Raumtemperatur oder erhöhten Temperaturen, beispielsweise 40 - 140 °C durchgeführt werden.

Die Blockierung kann in Substanz oder aber in Gegenwart geeigneter Lösungsmittel erfolgen. Ob lösungsmittelfrei gearbeitet wird, hängt weitgehend vom späteren Einsatzgebiet des blockierten Polyisocyanates ab. Wird es zur Herstellung von hitzehärtbaren PUR-Pulvern eingesetzt, erfolgt seine Herstellung lösungsmittelfrei. Beim Einsatz der erfindungsgemäßen Verbindungen als Härterkomponente zur Herstellung lösungsmittelhaltiger 1K-PUR-Einbrennlacke bietet sich eine Herstellung in Lösung an. Die Blockierung des Diisocyanates und/oder des daraus hergestellten Isocyanatoisocyanurates mit dem Malonsäureester C) findet so statt, daß zu dem auf ca. 80 - 100 °C erhitzten Diisocyanat und/oder dem daraus hergestellten Isocyanatoisocyanurat, gegebenenfalls in einem inerten Lösungsmittel mit 0,1 Gew.-% (bezogen auf die Summe aller Komponenten), der Malonester C) so zudosiert wird, daß die Temperatur des Reaktionsgemisches nicht über 120 °C steigt. Nach Beendigung der Malonsäureester-Zugabe wird das Gemisch noch so lange auf Reaktionstemperatur gehalten, bis praktisch eine vollständige Umsetzung stattgefunden hat. In der Regel kommt 1 NCO-Äquivalent der Isocyanatkomponente mit 1 mol Malonsäureester C) zur Reaktion; in manchen Fällen hat es sich als zweckmäßig erwiesen, bis zu 4 % NCO im Reaktionsgemisch nicht umzusetzen. Dies geschieht vor allem dann, wenn die Lagerstabilität und Verträglichkeit im Lösungsmittel erhöht werden sollen.

Die erfindungsgemäßen Verfahrensprodukte eignen sich als Härterkomponente für höherfunktionelle OH-Gruppen enthaltende Verbindungen. Damit bilden die Verfahrensprodukte Systeme, die oberhalb 80 °C, vorzugsweise 90 - 110 °C, zu hochwertigen Beschichtungen oder Lacküberzügen aushärten.

### Experimenteller Teil

### Beispiel 1

222 Gew.T. IPDI und 348 Gew.T. Malonsäuremethyl-tert.-butylester (MMtBE) werden bei Raumtemperatur vorgelegt. Nach Zugabe von 0,8 Gew.T. NaOCH₃-Lösung (ca. 30 % in Methanol) steigt die Temperatur auf ca. 35 °C. Anschließend wird auf 80 °C aufgeheizt und nach 2 und 4 h nochmals je 0,4 Gew.T. NaOCH₃-Lösung zugegeben. Nach 10 h beträgt der NCO-Gehalt 0,7 %. Nach dem Abkühlen und Stehenlassen (24 h, Raumtemperatur) ist der NCO-Gehalt auf 0,2 % gefallen. Die Viskosität des Reaktionsproduktes beträgt 36 000 mPa·s (bei 23 °C); der blockierte NCO-Gehalt 14,5 %.

### Beispiel 2

194 Gew.T. trimeres Hexamethylendiisocyanat (DESMODUR N 3300) mit einem NCO-Gehalt von 21,6 %, 216 Gew.T. Malonsäure-di-tert.-butyl-ester und 68,5 Gew.T. SOLVESSO 100/68,5 Gew.T. Butylacetat wurden mit 0,55 Gew.T. Zn-acetylacetonat so lange bei 90 °C erhitzt (ca. 10 h), bis der NCO-Gehalt auf 0,3 % gefallen ist. Die Viskosität des Reaktionsproduktes (als 75%ige Lösung) beträgt 2500 mPa·s; der blockierte NCO-Gehalt (bez. auf 75%ige Lösung) 7,5 %.

### Beispiel 3

243 Gew.T. trimeres IPDI (VESTANAT® T 1890) mit 17,3 % NCO, 278 Gew.T. SOLVESSO 100/Butylacetat (Gew.-Verh. = 1:1) und 174 Gew.T. Malonsäuremethyl-tert.-butylester werden mit 1 Gew.T. Zinkacetylacetonat in Analogie zum Beispiel 1 umgesetzt. Das Reaktionsprodukt (als 60%ige Lösung) enthält 0,4 % freies NCO. Die Viskosität des Reaktionsproduktes (60%ig) beträgt 460 mPa·s; der blockierte NCO-Gehalt 6,1 %.

### Beispiel 4

111 Gew.T. IPDI, 216 Gew.T. Malonsäure-di-tert.-butylester, 140 Gew.T. SOLVESSO 100 wurden mit 0,6 Gew.T. Zinkacetylacetonat analog zum Beispiel 3 umgesetzt. Das Reaktionsprodukt (als 70%ige Lösung) enthält 0,4 % freies NCO. Die Viskosität des Reaktionsproduktes (70%ige Lösung) beträgt 6200 mPa·s; der blockierte NCO-Gehalt 9,0 %.

### Vergleichsbeispiel A

111 Gew.T. IPDI, 160 Gew.T. Malonsäurediethylester, 116 Gew.T. SOLVESSO 100 wurden mit 0,4 Gew.T. Zinkacetylacetonat analog zum Beispiel 3 umgesetzt. Das Reaktionsprodukt (als 70%ige Lösung) enthält 0,3 % freies NCO. Die Viskosität des Reaktionsproduktes (70%ige Lösung) beträgt 5700 mPa·s; der blockierte NCO-Gehalt 10,6 %.

### Beispiele 5 bis 6 und Vergleichsbeispiel B

Reaktivitätsvergleich der erfindungsgemäßen Verbindungen zu den Verbindungen des Standes der Technik:

Die Verbindungen aus Beispiel 1 (als 70%ige Lösung in SOLVESSO 100), Beispiel 4 und dem Vergleichsbeispiel A wurden mit dem Polycaprolacton CAPA 305 im NCO:OH-Verhältnis 1:1 gemischt auf Al-Bleche appliziert und bei verschiedenen Temperaturen 15 und 30 min lang in einem Umlufttrockenschrank erhitzt. Der unterschiedliche Härtungsverlauf wird durch die Pendelhärte nach König (in sec) in Tabelle 1 wiedergegeben.

**Tabelle 1**

| **Beispiel Nr.** | | | **Härte noch König** | | | | | |
|---|---|---|---|---|---|---|---|---|
| | | | 90 °C | | 100 °C | | 110 °C | |
| | Harz | Härter | 15' | 30' | 15' | 30' | 15' | 30' |
| 5 | CAPA 305 | IPDI blockiert mit Malonsäure-di-tert.-butylester | 25 | 50 | 20 | 110 | 90 | 160 |
| 6 | CAPA 305 | IPDI + 2 Malonsäuremethyl-tert.-butylester | klebt | 10 | 50 | 140 | 100 | 160 |
| B | CAPA 305 | IPDI blockiert mit Malonsäurediethylester | klebt | klebt | klebt | 60 | 80 | 150 |

## Patentansprüche

1. Vollständig oder teilweise mit Malonsäureestern blockierte (cyclo)aliphatische Polyisocyanate, wobei als Polyisocyanate
A) Diisocyanate der allgemeinen Formel
OCN-R-NCO,
wobei R ein (cyclo)-aliphatischer Kohlenwasserstoffrest mit 6 - 14 C-Atomen bedeutet und/oder
B) Polyisocyanatoisocyanurate der allgemeinen Formel 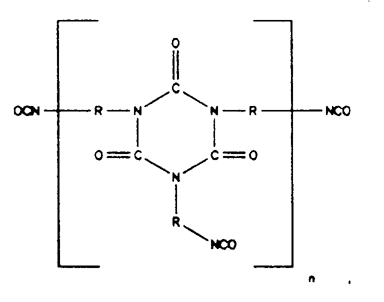 wobei n = 1 - 3 sein kann, R die Bedeutung wie unter A angegeben hat und A:B in einem Gewichtsverhältnis von (100-0):(0-100) zueinander stehen,
C) und als Blockierungsmittel Malonsäureester der allgemeinen Formel 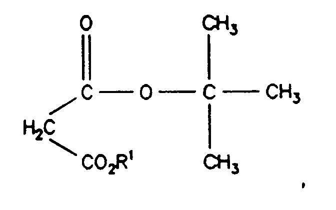 wobei R¹ ein Alkylrest mit 1 - 10 C-Atomen oder 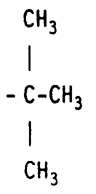 bedeutet,
eingesetzt werden und der Anteil an freien NCO-Gruppen im Reaktionsprodukt höchstens 4 % beträgt.

2. Malonsäureesterblockierte Polyisocyanate nach Anspruch 1,
dadurch gekennzeichnet,
daß als Diisocyanate A Isophorondiisocyanat, Hexamethylendiisocyanat und 2.4.4(2.2.4)-Trimethylhexamethylendiisocyanat eingesetzt werden.

3. Malonsäureesterblockierte Polyisocyanate nach Anspruch 1,
dadurch gekennzeichnet,
daß als Polyisocyanatoisocyanurate B Isocyanurate des Isophorondiisocyanats oder Hexamethylendiisocyanats eingesetzt werden.

4. Malonsäureesterblockierte Polyisocyanate nach Anspruch 1,
dadurch gekennzeichnet,
daß als Blockierungsmittel Malonsäuremethyl-, Malonsäureethyl-, Malonsäurepropyl-, Malonsäure-isopropyl-, Malonsäurebutyl-, Malonsäure-2-Ethylhexyl-tert.-butylester sowie Malonsäure-di-tert.-butylester eingesetzt werden.

5. Verfahren zur Herstellung von vollständig oder teilweise mit Malonsäureestern blockierten (cyclo)-aliphatischen Polyisocyanaten, erhalten durch Umsetzung von
A) Diisocyanaten der allgemeinen Formel
OCN-R-NCO,
wobei R ein (cyclo)-aliphatischer Kohlenwasserstoffrest mit 6 - 14 C-Atomen bedeutet und/oder
B) Polyisocyanatoisocyanuraten der allgemeinen Formel 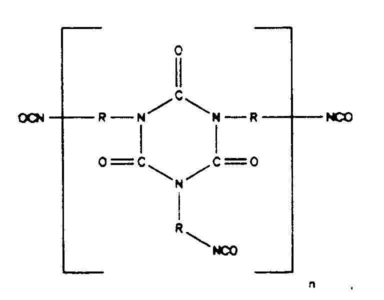 wobei n = 1 - 3 sein kann, R die Bedeutung wie unter A angegeben bedeutet und A:B in einem Gewichtsverhältnis von (100-0):(0-100) zueinander stehen,
C) und Blockierungsmitteln der allgemeinen Formel 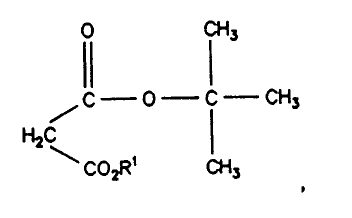 wobei R¹ ein Alkylrest mit 1 - 10 C-Atomen oder 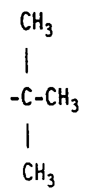 bedeutet,
wobei der Anteil an freien NCO-Gruppen im Reaktionsprodukt höchstens 4 % betragen darf, in Gegenwart eines Katalysators.

6. Verfahren zur Herstellung von malonsäureesterblockierten Polyisocyanaten nach Anspruch 5,
dadurch gekennzeichnet,
daß Gemische aus Komponente A und Komponente B durch Trimerisierung der Komponente A in Gegenwart eines Trimerisierungskatalysators bis zum gewünschten Gehalt an Komponente B erhalten werden.
